# FASCICULE DE BREVET EUROPEEN

(11) **EP 3 963 199 B1**
(45) Date de publication et mention de la délivrance du brevet: **31.05.2023**
(21) Numéro de dépôt: 20715882.5
(22) Date de dépôt: 03.04.2020
(51) Int. Cl.: F02K 1/72, F02K 1/82, G10K 11/168, G10K 11/172

(54) **GRILLE D'INVERSEUR DE POUSSÉE INCLUANT UN TRAITEMENT ACOUSTIQUE**
SCHUBUMKEHRERKASKADE MIT SCHALLBEHANDLUNG
THRUST REVERSER CASCADE INCLUDING ACOUSTIC TREATMENT

(30) Priorité: 03.05.2019 FR 1904658
(43) Date de publication de la demande: 09.03.2022
(73) Titulaire: SAFRAN AIRCRAFT ENGINES, 75015 Paris (FR)
(72) Inventeur: JODET, Norman, Bruno, André, 77550 MOISSY-CRAMAYEL (FR); GONZALEZ, Jéremy, Paul, Francisco, 77550 MOISSY-CRAMAYEL (FR)
(74) Mandataire: Cabinet Beau de Loménie
(86) Numéro de dépôt international: PCT/EP2020/059564
(87) Numéro de publication internationale: WO 2020/224888

(56) Documents cités:
- EP-A2- 1 978 232
- FR-A1- 3 007 799
- FR-A1- 3 039 517
- US-A1- 2002 092 948
- US-A1- 2016 076 487

## Description

### Domaine Technique

L'invention concerne le traitement acoustique des ondes sonores émises par une turbomachine d'un aéronef, et plus particulièrement le traitement des ondes sonores au niveau des inverseurs de poussée de la turbomachine.

### Technique antérieure

Lorsqu'une turbomachine est en fonctionnement, l'interaction entre l'écoulement et les parties solides de la turbomachine sont responsables de la génération de bruits qui se propagent de part et d'autre de la turbomachine.

Un des moyens d'atténuer ce rayonnement acoustique est d'intégrer des moyens de traitement acoustique au niveau des surfaces en contacts avec les ondes sonores.

Classiquement, le traitement acoustique d'un turboréacteur, et plus précisément du bruit rayonné par l'interaction entre le rotor et son environnement, est fait à l'aide de panneaux absorbants disposés au niveau des surfaces mouillées du conduit dans lequel se propagent les ondes sonores. On entend par surfaces mouillées, les surfaces en contact avec un écoulement fluide. Ces panneaux sont généralement des matériaux composites de type sandwich emprisonnant un nid d'abeille formant des cellules d'absorption acoustique.

Il est connu par exemple dans l'état de la technique des panneaux acoustiques à un seul degré de liberté, ou SDOF pour « Single degree of freedom » en anglais, qui présentent une structure classique en nid d'abeilles de panneaux de traitement acoustique garnissant les parois de la nacelle d'une turbomachine.

De par le principe de fonctionnement des technologies de panneau de traitement acoustique utilisant des cavités résonnantes, l'encombrement radial, c'est-à-dire l'épaisseur radiale, des panneaux de traitement acoustique dépend de la fréquence de traitement ciblée pour obtenir un maximum d'efficacité en termes d'atténuation acoustique.

Cependant, les architectures moteurs présentent de plus en plus des vitesses de rotation des roues à aubes de plus en plus lentes et un nombre d'aubes sur les roues à aubes de plus en plus petit, ce qui entraîne une baisse des fréquences dominantes du bruit associé au module comprenant la soufflante et l'étage redresseur, ou module « fan-OGV » en anglais pour « Outlet Guide Vane ». De ce fait, l'adéquation entre l'épaisseur optimale des panneaux acoustiques et l'encombrement disponible dans les nacelles n'est, actuellement, pas satisfaite.

Pour ralentir un aéronef, une turbomachine comprend généralement des inverseurs de poussée. Il existe principalement deux technologies d'inverseurs de poussée qui sont basées sur l'action d'une grille. On distingue deux types d'inverseurs de poussée à grille : les inverseurs de poussée à grille fixe et les inverseurs de poussée à grille en liaison glissière.

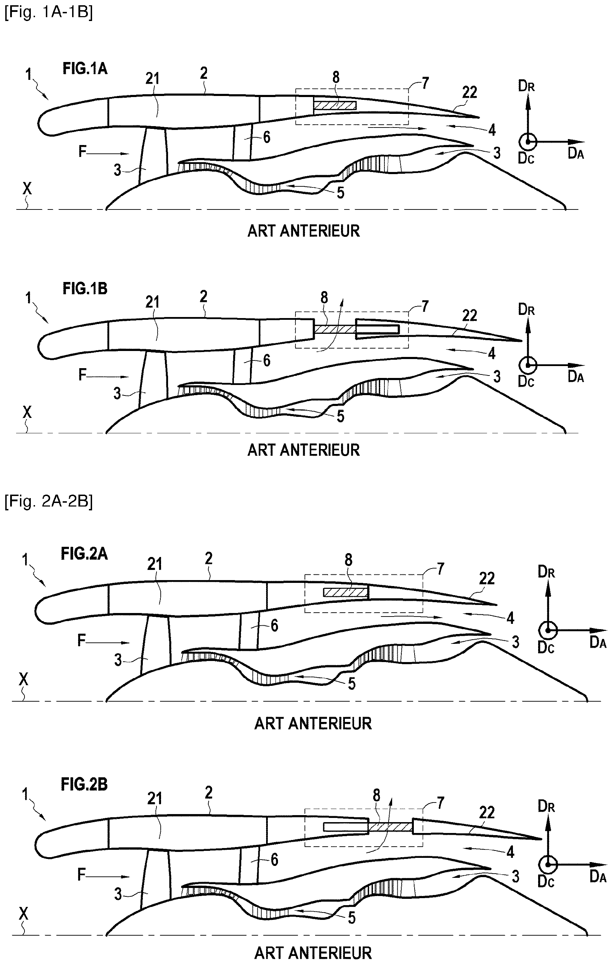

Sur les figures 1A et 1B sont présentées des vues schématiques en section dans un plan longitudinal d'une turbomachine 1 selon un premier mode de réalisation connu de l'état de la technique respectivement dans une position d'inversion de poussée inactivée et dans une position d'inversion de poussée activée.

La turbomachine 1 comprend une nacelle 2 à symétrie de révolution autour d'un axe X définissant une direction axiale D_{A}, une direction radiale D_{R} et une direction circonférentielle D_{C}, une soufflante 3, une veine primaire 4, une veine secondaire, un étage redresseur primaire 5, un étage redresseur secondaire 6, et un dispositif 7 d'inversion de poussée à grille comportant une grille 8.

Comme cela est illustrée sur les figures 1A et 1B qui représentent une turbomachine dotée d'un inverseur de poussée à grille fixe, dans les inverseurs de poussée à grille fixe, la grille 8 est encastrée, c'est-à-dire solidaire, avec une partie amont 21 de la nacelle 2 et en liaison glissière avec une partie aval 22 de la nacelle 2, l'amont et l'aval étant définis par rapport au sens d'écoulement d'un flux gazeux F dans la turbomachine 1. En se translatant vers l'aval, la partie aval 22 de la nacelle 2 découvre la grille 8 qui devient la seule interface entre l'écoulement interne à la nacelle 2 et le milieu ambiant dans lequel évolue la turbomachine 1.

Sur les figures 2A et 2B sont présentées des vues schématiques en section dans un plan longitudinal d'une turbomachine 1 selon un second mode de réalisation connu de l'état de la technique respectivement dans une position d'inversion de poussée inactive et dans une position d'inversion de poussée activée.

Comme cela est illustrée sur les figures 2A et 2B qui représentent une turbomachine 1 dotée d'un inverseur de poussée à grille en liaison glissière, dans les inverseurs de poussée à grille fixe, la grille 8 est en liaison glissière par rapport à la partie amont 21 de la nacelle 2 et en liaison d'encastrement par rapport à la partie aval 22 de la nacelle 2. En se translatant vers l'aval, la partie aval 22 de la nacelle 2 entraine la grille 8 hors de la nacelle 2 pour la positionner à l'interface entre l'écoulement interne à la nacelle 2 et le milieu ambiant.

D'autres inverseurs de poussée selon l'art antérieur sont connus de FR 3 039 517 A1 et EP 1 978 232 A2.

Les inverseurs de poussée représentent à la fois, un coût, une masse et un encombrement très pénalisants pour les performances de l'ensemble propulsif, alors qu'ils sont utilisés seulement à la fin de la phase d'atterrissage. Le volume qu'ils utilisent dans la nacelle ne peut notamment pas être utilisé, dans l'état de l'art, pour le traitement acoustique des ondes sonores émises par la turbomachine.

Dans les architectures d'ensemble propulsif utilisant des inverseurs de poussée à portes qui se déploient à l'intérieur du flux secondaire pour dévier l'écoulement vers l'amont à l'extérieur de la nacelle, une pratique connue d'intégration de traitement acoustique classique consiste à intégrer des panneaux acoustiques dans des cavités des portes d'inverseur. Cette pratique consiste simplement à intégrer des panneaux absorbants classiques dans les volumes disponibles, comme cela est fait dans le carter fan.

### Exposé de l'invention

L'invention vise à fournir un dispositif d'inversion de poussée à grille qui permette à la fois de réorienter un flux d'air vers l'amont de la turbomachine à l'extérieur de la nacelle et de minimiser les pertes de charge à travers la grille lorsque l'inversion de poussée est activée, et de maximiser l'efficacité d'absorption acoustique lorsque l'inversion de poussée est inactive.

Un objet de l'invention propose un dispositif d'inversion de poussée à grille pour une turbomachine d'un aéronef, le dispositif comprenant une grille d'inversion de poussée et un caisson. La grille s'étend dans un premier plan définissant une première direction et une seconde direction et comporte des premières cavités. Le caisson comprend une ouverture s'étendant dans un plan orthogonal à ladite première direction et définissant un logement dans lequel ladite grille peut être insérée selon ladite première direction. Le caisson et la grille sont en translation relative l'un par rapport à l'autre dans la première direction entre une première position du dispositif d'inversion de poussée dans laquelle la grille est entièrement disposée dans le logement et une seconde position du dispositif d'inversion de poussée dans laquelle ladite grille est au moins en partie hors dudit logement.

Selon une caractéristique générale de l'invention, le caisson comprend un panneau de traitement acoustique comportant des secondes cavités s'étendant dans un second plan parallèle au premier plan, chaque première cavité étant en regard d'une seconde cavité lorsque le dispositif d'inversion de poussée est dans la première position pour former une cellule de traitement acoustique.

La grille d'inversion de poussée peut être formée par une grille annulaire monobloc ou bien par une pluralité de sections de grille assemblables ensemble pour former un cylindre creux à base circulaire ou polygonale.

De même, le panneau de traitement acoustique peut être formé par un panneau annulaire monobloc ou bien par une pluralité de sections de panneau assemblables ensemble pour former un cylindre creux à base circulaire ou polygonale.

Une grille d'inverseur de poussée est habituellement caractérisée par une structure métallique, dimensionné de sorte à tenir la charge aérodynamique à laquelle elle est soumise en phase d'inversion de poussée. Cette structure génère également des pertes de charges. Une cellule est un volume constitué de quatre parois à travers lequel un fluide peut circuler. Disposer d'une densité de cellules trop importante peut nuire à l'efficacité de l'inverseur de poussée du fait d'une résistante trop forte au passage de l'air.

De l'autre côté, les structures de panneaux acoustiques ne subissent pas d'effort aérodynamique. Les cloisons qui les constituent sont très fines et leur faible volume permet d'optimiser la fréquence d'accord du panneau, c'est-à-dire la fréquence d'atténuation maximale.

Les deux fonctions d'inversion de poussée et de traitement acoustique font donc appel à des structures de cellule très différentes.

Lorsque le dispositif d'inversion de poussée à grille est monté sur un turboréacteur, la première direction correspond à une direction axiale du turboréacteur et la seconde direction correspond à une direction circonférentielle du turboréacteur lorsque la grille est au moins partiellement annulaire ou à une direction tangente à la direction circonférentielle du turboréacteur lorsque la grille est plane, autrement dit non courbée.

Lorsque le dispositif d'inversion de poussée est dans sa première position où l'inversion de poussée est inactive, les premières cavités de la grille prolongent ainsi les secondes cavités du panneau de traitement acoustique, les secondes cavités étant des cavités résonantes. La superposition des premières cavités et des secondes cavités dans une direction orthogonale au premier plan, par exemple dans une direction radiale, permet de former des cellules de traitement acoustique dont la hauteur est supérieure à la hauteur de la seconde cavité dans la direction orthogonale au premier plan. La cellule de traitement acoustique ainsi formée par la superposition d'une seconde et d'une première cavités comprend une hauteur de traitement permettant, d'une part, d'accroître l'absorption des ondes acoustiques, et d'autre part, d'absorber des ondes acoustiques de plus basses fréquences qu'avec le panneau de traitement acoustique uniquement.

Dans un premier aspect du dispositif d'inversion de poussée, la grille d'inversion de poussée peut comprendre des premières cloisons disposées successivement selon une première direction et parallèles les unes aux autres et des premières cloisons transverses sécantes desdites premières cloisons et s'étendant chacune dans des plans parallèles les uns aux autres et parallèles à la première direction. Le panneau de traitement acoustique peut comprendre des secondes cloisons disposées successivement selon la première direction et parallèles les unes aux autres et des secondes cloisons transverses sécantes desdites secondes cloisons et s'étendant chacune dans des plans parallèles les uns aux autres et parallèles à la première direction, les premières cavités étant définies chacune par deux premières cloisons et deux premières cloisons transverses, les secondes cavités étant définies chacune par deux secondes cloisons et deux secondes cloisons transverses. Chaque première cloison peut être disposée dans le prolongement d'une seconde cloison dans une direction sécante au premier plan et chaque première cloison transverse peut être disposée dans le prolongement d'une seconde cloison transverse dans ladite direction sécante au premier plan lorsque le dispositif d'inversion de poussée est dans ladite première position.

Les premières cloisons sont destinées à être orientées selon une direction sécante à la direction d'écoulement d'un flux gazeux à l'intérieur d'une turbomachine comportant un dispositif d'inversion de poussée doté d'une telle grille. Lorsque la grille est montée sur un dispositif d'inversion de poussée sur une turbomachine, les premières cloisons, orientées selon une direction azimutale ou radiale de la turbomachine, sont indispensables pour garantir la fonctionnalité d'inversion de poussée. C'est en effet grâce à ces premières cloisons que le flux d'air circulant dans une veine, à l'intérieur de la nacelle dans laquelle le dispositif d'inversion de poussée est monté, peut être capté et réorienté vers l'amont de la turbomachine, par rapport au sens d'écoulement du flux à l'intérieur de la nacelle, à l'extérieur de la nacelle.

Les premières cloisons transverses sont destinées à être orientées selon la direction du flux gazeux à l'intérieur d'une turbomachine comportant un dispositif d'inversion de poussée doté d'une telle grille. Lorsque la grille est montée sur un dispositif d'inversion de poussée sur une turbomachine, les premières cloisons transverses, orientées selon une direction axiale de la turbomachine, ne sont pas indispensables pour la fonctionnalité d'inversion de poussée. En revanche, elles permettent la formation de cavités résonnantes permettant d'atténuer des ondes acoustiques générées par la turbomachine.

Dans un deuxième aspect du dispositif d'inversion de poussée, les secondes cloisons du panneau de traitement acoustique peuvent comprendre une première extrémité en regard de ladite grille d'inversion de poussée et une seconde extrémité opposée à la première extrémité. Et, pour chaque seconde cloison, la tangente à la seconde cloison à la seconde extrémité de la seconde cloison peut former un premier angle avec un plan parallèle audit premier plan lorsque le dispositif d'inversion de poussée est dans ladite première position, le premier angle étant compris entre 60° et 120°.

Cette orientation des secondes cloisons du panneau de traitement acoustique à une extrémité opposée à l'extrémité en regard de la grille d'inversion de poussée permet de définir une orientation sensiblement radiale des cellules de traitement acoustique, pour éviter de pénaliser le fonctionnement du résonateur du fait de réflexions acoustiques non souhaitées sur les cloisons.

Les secondes cloisons du panneau de traitement acoustique peuvent ainsi être courbées avec éventuellement un ou plusieurs points d'inflexion. L'utilisation de secondes cloisons courbées dans le panneau de traitement acoustique permet de maximiser l'efficacité de traitement acoustique sans dégrader la fonctionnalité d'inversion de poussée de la grille quel que soit le positionnement du panneau par rapport à la grille dans la direction orthogonale au premier plan.

La seconde extrémité des secondes cloisons peut être ainsi soit à l'entrée de la cellule de traitement acoustique soit la sortie de la cellule de traitement acoustique en fonction du positionnement du panneau de traitement acoustique par rapport à la grille d'inversion de poussée dans une direction perpendiculaire au premier plan, c'est-à-dire par exemple dans une direction radiale.

Dans un troisième aspect du dispositif d'inversion de poussée, les premières cloisons de la grille d'inversion de poussée peuvent comprendre une première extrémité en regard du panneau de traitement acoustique et une seconde extrémité opposée à la première extrémité. Et, pour chaque première cloison, la tangente à la première cloison à la première extrémité de la première cloison peut former une premier angle avec la tangente à la seconde cloison à la première extrémité de la seconde cloison lorsque le dispositif d'inversion de poussée est dans ladite première position, le second angle étant compris entre -20° et +20°.

Cette orientation des premières cloisons de la grille d'inversion de poussée à une extrémité en regard du panneau de traitement acoustique permet de définir un écart relativement faible concernant l'orientation des cellules au niveau de l'interface entre la grille d'inversion de poussée et le panneau de traitement acoustique, et ainsi d'éviter de pénaliser le fonctionnement du résonateur du fait de réflexions acoustiques non souhaitées sur les cloisons, sans perturber la fonctionnalité d'inversion de poussée.

Dans un quatrième aspect du dispositif d'inversion de poussée, les premières cloisons de la grille peuvent comprendre une première courbure dans la direction orthogonale audit premier plan et les secondes cloisons du panneau peuvent comprendre une seconde courbure dans la direction orthogonale audit premier plan distincte de la première courbure. Les cellules de traitement acoustique formées dans la première position du dispositif peuvent comprendre deux parois ondulées orthogonales à la première direction et formées chacune par une première cloison et une seconde cloison dans le prolongement l'une de l'autre.

Lesdites deux parois d'une cellule de traitement acoustique présentent ainsi une ondulation, c'est-à-dire une courbe avec un point d'inflexion, qui permet de maximiser l'absorption acoustique par la cellule tout en maintenant l'efficacité d'inversion de poussée de la grille d'inversion de poussée lorsque cette dernière est utilisée pour l'inversion de poussée.

Dans un cinquième aspect du dispositif d'inversion de poussée, les premières cavités et les secondes cavités peuvent avoir la même forme dans un plan de coupe parallèle audit premier plan.

Dans un sixième aspect du dispositif d'inversion de poussée, le caisson peut comprendre en outre une interface poreuse d'une épaisseur comprise entre 0,5 mm et 20 mm, formée d'au moins une couche de matériau poreux et disposée à l'interface entre le panneau de traitement acoustique et la grille lorsque le dispositif d'inversion de poussée est dans la première position, l'épaisseur s'étendant dans une direction perpendiculaire audit premier plan.

L'ajout d'une interface poreuse permet d'améliorer l'interface entre les deux structures cellulaires, à savoir le panneau de traitement acoustique et la grille d'inversion de poussée en assurant une meilleure étanchéité au niveau des jonctions entre les cloisons du panneau de traitement acoustique et les cloisons de la grille d'inversion de poussée, tout en offrant un jeu intéressant pour améliorer le glissement de la grille d'inversion de poussée au moment de l'utilisation de la fonction d'inversion de poussée, c'est-à-dire lorsque le dispositif est dans la deuxième position.

Dans un septième aspect du dispositif d'inversion de poussée, les cellules de traitement acoustique peuvent comprendre une hauteur comprise entre 10 mm et 100 mm, la hauteur étant mesurée dans une direction perpendiculaire au premier plan peut être.

Dans un huitième aspect du dispositif d'inversion de poussée, le caisson peut comprendre une paroi perforée et une paroi acoustiquement réfléchissante s'étendant chacune parallèlement audit premier plan, la grille et le panneau de traitement acoustique étant disposés entre la paroi perforée et la paroi acoustiquement réfléchissante lorsque le dispositif d'inversion de poussée est dans la première position.

Dans un neuvième aspect du dispositif d'inversion de poussée, lequel la paroi perforée peut être directement assemblée par collage à ladite grille ou ledit un panneau de traitement acoustique.

Dans un dixième aspect du dispositif d'inversion de poussée, le panneau de traitement acoustique peut être disposé entre la paroi perforée et la grille d'inversion de poussée lorsque le dispositif d'inversion de poussée est dans la première position.

Dans un onzième aspect du dispositif d'inversion de poussée, le panneau de traitement acoustique peut être disposé entre la paroi acoustiquement réfléchissante et la grille d'inversion de poussée lorsque le dispositif d'inversion de poussée est dans la première position.

Dans un douzième aspect du dispositif d'inversion de poussée, la grille peut être mobile et le caisson fixe pour utiliser le dispositif d'inversion de poussée dans une turbomachine dotée d'un inverseur de poussée à grille en liaison glissière ou bien la grille peut être fixe et le caisson mobile pour utiliser le dispositif d'inversion de poussée dans une turbomachine dotée d'un inverseur de poussée à grille fixe.

Dans un autre objet de l'invention, il est proposé une turbomachine destinée à être montée sur un aéronef, la turbomachine comprenant une nacelle à symétrie de révolution définissant une direction axiale et une direction radiale, la nacelle comportant une épaisseur selon la direction radiale et un logement s'étendant selon la direction axiale dans son épaisseur pour recevoir une grille d'un dispositif d'inversion de poussée à grille.

Selon une caractéristique générale de cet objet de l'invention, la turbomachine peut comprendre un dispositif d'inversion de poussée à grille tel que défini ci-dessus, la grille étant disposée, lorsque l'inversion de poussée n'est pas requise, dans le logement correspondant de la nacelle de la turbomachine.

Dans un autre objet de l'invention, il est proposé un aéronef comprenant au moins une turbomachine telle que définie ci-dessus.

### Brève description des dessins

L'invention sera mieux comprise à la lecture faite ci-après, à titre indicatif mais non limitatif, en référence aux dessins annexés sur lesquels :
[Fig. 1A-1B] Les figures 1A et 1B, déjà décrites, présentent des vues schématiques en section dans un plan longitudinal d'une turbomachine selon un premier mode de réalisation connu de l'état de la technique respectivement dans une position d'inversion de poussée inactive et dans une position d'inversion de poussée activée.
[Fig. 2A-2B] Les figures 2A et 2B, déjà décrites, présentent des vues schématiques en section dans un plan longitudinal d'une turbomachine selon un second mode de réalisation connu de l'état de la technique respectivement dans une position d'inversion de poussée inactive et dans une position d'inversion de poussée activée.
[Fig. 3] La figure 3 représente une vue schématique en section selon un plan comprenant la direction axiale et la direction radiale d'un dispositif d'inversion de poussée à grille dans une position d'inversion de poussée inactive selon un premier mode de réalisation de l'invention.
[Fig. 4] La figure 4 représente une vue schématique en section selon un plan comprenant la direction axiale et la direction radiale d'un dispositif d'inversion de poussée à grille dans une position d'inversion de poussée activée selon un premier mode de réalisation de l'invention.
[Fig. 5] La figure 5 illustre schématiquement une vue en coupe selon un plan comprenant la direction axiale et la direction circonférentielle d'une grille du dispositif d'inversion de poussée.
[Fig. 6] La figure 6 illustre schématiquement une vue en coupe selon un plan comprenant la direction axiale et la direction circonférentielle d'un panneau de traitement acoustique du dispositif d'inversion de poussée.
[Fig. 7] La figure 7 représente une vue schématique en section selon un plan comprenant la direction axiale et la direction radiale d'un dispositif d'inversion de poussée dans une position d'inversion de poussée inactive selon un deuxième mode de réalisation de l'invention.
[Fig. 8] La figure 8 représente une vue schématique en section selon un plan comprenant la direction axiale et la direction radiale d'un dispositif d'inversion de poussée à grille dans une position d'inversion de poussée activée selon un deuxième mode de réalisation de l'invention.
[Fig. 9] La figure 9 est un zoom de la figure 7 illustrant l'agencement des premières cloisons et des secondes cloisons dans la première position du dispositif.
[Fig. 10] La figure 10 représente une vue schématique en section selon un plan comprenant la direction axiale et la direction radiale d'un dispositif d'inversion de poussée à grille dans une position d'inversion de poussée inactive selon un troisième mode de réalisation de l'invention.
[Fig. 11] La figure 11 représente une vue schématique en section selon un plan comprenant la direction axiale et la direction radiale d'un dispositif d'inversion de poussée à grille dans une position d'inversion de poussée activée selon un troisième mode de réalisation de l'invention.
[Fig.12] La figure 12 est un zoom de la figure 10 illustrant l'agencement des premières cloisons et des secondes cloisons dans la première position du dispositif.
[Fig. 13] La figure 13 représente une vue schématique en section selon un plan comprenant la direction axiale et la direction radiale d'un dispositif d'inversion de poussée à grille dans une position d'inversion de poussée inactive selon un quatrième mode de réalisation de l'invention.
[Fig. 14] La figure 14 représente une vue schématique en section selon un plan comprenant la direction axiale et la direction radiale d'un dispositif d'inversion de poussée à grille dans une position d'inversion de poussée activée selon un quatrième mode de réalisation de l'invention.
[Fig. 15] La figure 15 représente une vue schématique en section selon un plan comprenant la direction axiale et la direction radiale d'un dispositif d'inversion de poussée à grille dans une position d'inversion de poussée inactive selon un cinquième mode de réalisation de l'invention.
[Fig. 16] La figure 16 représente une vue schématique en section selon un plan comprenant la direction axiale et la direction radiale d'un dispositif d'inversion de poussée à grille dans une position d'inversion de poussée activée selon un cinquième mode de réalisation de l'invention.
[Fig. 17] La figure 17 représente une vue schématique en section selon un plan comprenant la direction axiale et la direction radiale d'un dispositif d'inversion de poussée à grille dans une position d'inversion de poussée inactive selon un sixième mode de réalisation de l'invention.
[Fig. 18] La figure 18 représente une vue schématique en section selon un plan comprenant la direction axiale et la direction radiale d'un dispositif d'inversion de poussée à grille dans une position d'inversion de poussée activée selon un sixième mode de réalisation de l'invention.

### Description des modes de réalisation

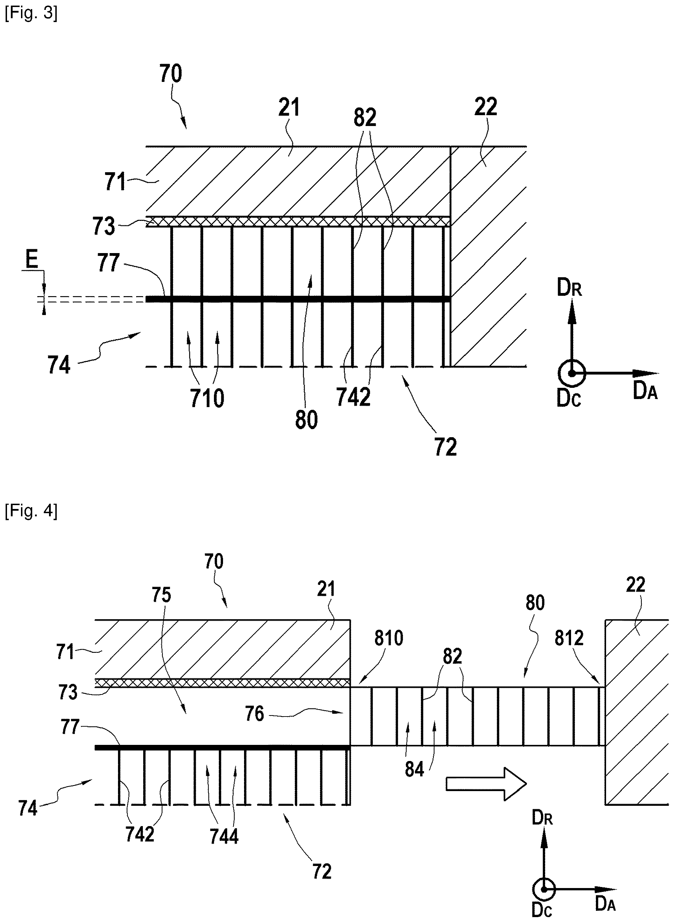

Sur les figures 3 à 12, la turbomachine 1 comprend un dispositif d'inversion de poussée 70 pouvant fonctionner selon le fonctionnement décrit sur les figures 2A et 2B. La turbomachine comprend une nacelle à symétrie de révolution autour d'un axe X définissant une direction axiale D_{A}, une direction radiale D_{R} et une direction circonférentielle D_{C}.

Sur les figures 3 et 4 sont représentées des vues schématiques en section selon un plan comprenant la direction axiale et la direction radiale d'un dispositif d'inversion de poussée à grille monté sur une turbomachine d'aéronef selon un premier mode de réalisation de l'invention et respectivement dans une position d'inversion de poussée inactive et dans une position d'inversion de poussée activé.

Le dispositif d'inversion de poussée 70 comprend une pluralité de grilles 80 assemblées pour former une couronne grillagée. La couronne peut être à base cylindrique ou à base polygonale, les grilles 80 s'étendant respectivement soit dans un plan courbe comprenant la direction axiale D_{A} et la direction circonférentielle D_{C} de la turbomachine, soit dans un plan droit comprend la direction axiale D_{A} et une direction tangente à la direction circonférentielle D_{C}.

Dans les modes de réalisations illustrés les grilles 80 sont courbes pour faciliter l'explication et les repères, et s'étendent principalement dans un plan courbe, dénommé ci-après premier plan, comprenant la direction axiale D_{A} et la direction circonférentielle D_{C}.

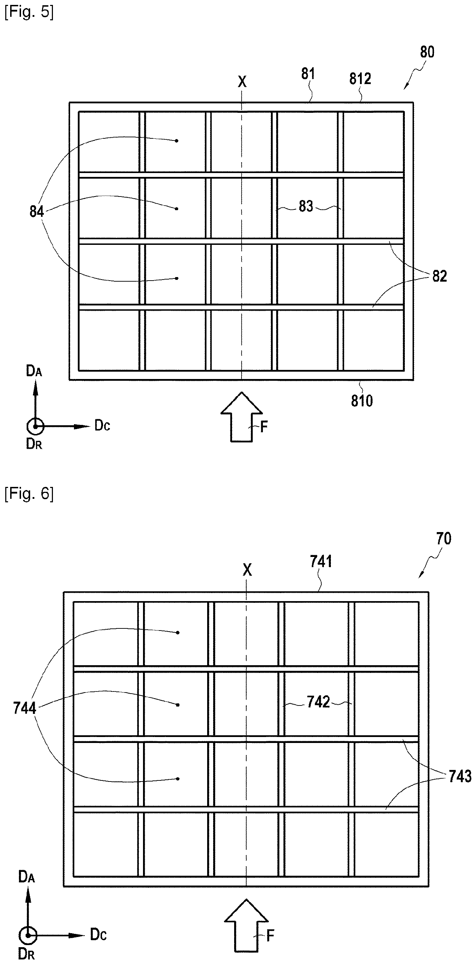

Comme cela est représenté sur la figure 5 qui est vue en coupe d'une grille 80 dans un plan de coupe parallèle au premier plan, chaque grille 80 comprend un cadre 81 à l'intérieur duquel s'étendent des premières cloisons 82 dans la direction circonférentielle D_{C} et des premières cloisons transverses 83 dans la direction axiale D_{A}. Le cadre 81, les premières cloisons 82 et les premières cloisons transverse 83 possèdent une hauteur dans la direction radiale D_{R} comprise entre 5 mm et 50 mm.

L'épaisseur des premières cloisons 82 est comprise entre 0,5 mm et 5 mm pour être suffisamment épaisses pour tenir les cas de charges auxquels elles sont soumises, mais aussi les plus fines possibles pour minimiser la masse et les pertes de charge dans la grille.

Les premières cloisons 82 sont des cloisons azimutales destinées à orienter le flux gazeux F vers l'extérieur de la nacelle 2 et en amont de la turbomachine 1 pour l'inversion de poussée lorsque le dispositif d'inversion de poussée est activée. Les premières cloisons transverses 83 sont des cloisons axiales destinées à définir, avec les premières cloisons 82, des premières cavités 84 pour l'absorption des ondes acoustiques générées par la turbomachine, lorsque le dispositif d'inversion de poussée est inactif.

La distance dans la direction circonférentielle D_{C} séparant deux premières cloisons transverses 83 adjacentes l'une de l'autre est égale à la distance dans la direction axiale D_{A} séparant deux premières cloisons 82, pour ainsi favoriser la propagation acoustique en ondes planes à l'intérieur des cavités.

La grille 80 comprend, selon la direction axiale D_{A} de la turbomachine sur laquelle le dispositif 70 est monté, une première extrémité axiale 810 et une seconde extrémité axiale 812. Comme cela est illustré sur les figures 3 et 4, dans les modes de réalisation illustrés sur les figures 3 à 12 et pouvant fonctionner selon le fonctionnement décrit sur les figures 2A et 2B, la seconde extrémité axiale 812 des grilles 80 est fixée sur une portion aval 22 de la nacelle 2 mobile par rapport à une portion amont 21 de la nacelle 2.

Logé dans la partie amont 21 de la nacelle 2 de la turbomachine 1, le dispositif d'inversion de poussée 70 comprend une pluralité de caissons 71 assemblées pour former une couronne de panneaux. La couronne peut être à base cylindrique ou à base polygonale, les caissons 71 s'étendant respectivement soit dans un plan courbe comprenant la direction axiale D_{A} et la direction circonférentielle D_{C} de la turbomachine 1, soit dans un plan droit comprend la direction axiale D_{A} et une direction tangente à la direction circonférentielle D_{C}.

Dans les modes de réalisations illustrés les caissons 71sont courbes pour faciliter l'explication et les repères, et s'étendent principalement dans un plan courbe comprenant la direction axiale D_{A} et la direction circonférentielle D_{C}.

Chaque caisson 71 comporte une paroi perforée 72, une paroi acoustiquement réfléchissante 73 et un panneau de traitement acoustique 74. Le caisson 71 comprend successivement dans le plan radiale D_{R} en s'éloignant de l'axe de révolution de la turbomachine 1, la paroi perforée 72, le panneau de traitement acoustique 74, un logement 75 configuré pour accueillir la grille 80, et la paroi acoustiquement réfléchissante 73.

Le caisson 71 comprend en outre une ouverture 76 communiquant avec le logement 75, l'ouverture s'étendant dans un plan comprenant la direction radiale D_{R} et la direction circonférentielle D_{C} à une extrémité axiale du caisson 71 en regard de la partie aval 22 de la nacelle 2.

Lorsque l'inversion de poussée est inactive, le dispositif d'inversion de poussée 70 est dans une première position illustrée sur la figure 3 dans laquelle la grille 80 est disposée dans le logement 75 du caisson 71.

Lorsque l'inversion de poussée est activée, le dispositif d'inversion de poussée 70 est dans une seconde position illustrée sur la figure 4 dans laquelle la grille 80 est sortie du caisson 71 dans la direction axiale D_{A} en translation avec la partie aval 22 de la nacelle, laissant le logement 75 libre au moins en partie.

Le panneau de traitement acoustique 74 est disposé dans le caisson 71 dans un second plan parallèle au premier plan dans lequel s'étend la grille 80, et le panneau acoustique 74 est collé à la paroi perforée 72.

Le panneau de traitement acoustique 74 de chaque caisson 71 comprend des secondes cloisons 742 et des secondes cloisons transverses

Comme cela est représenté sur la figure 6 qui est vue en coupe d'un panneau de traitement acoustique 74 dans un plan de coupe parallèle au premier plan, chaque panneau de traitement acoustique 74 comprend un cadre 741 à l'intérieur duquel s'étendent des secondes cloisons 742 dans la direction circonférentielle D_{C} et des secondes cloisons transverses 743 dans la direction axiale DA.

Les secondes cloisons 742 sont des cloisons azimutales et les secondes cloisons transverses 743 sont des cloisons axiales. Les secondes cloisons 742 et les secondes cloisons transverses 743 définissent entre elles des secondes cavités 744 pour l'absorption des ondes acoustiques générées par la turbomachine, lorsque le dispositif d'inversion de poussée est dans sa première position.

La distance dans la direction circonférentielle D_{C} séparant deux secondes cloisons transverses 743 adjacentes l'une de l'autre est égale à la distance dans la direction axiale D_{A} séparant deux secondes cloisons 742, pour ainsi favoriser la propagation acoustique en ondes planes à l'intérieur des cavités.

En outre, à l'interface entre le panneau de traitement acoustique 71 et la grille 80, chaque caisson 70 comprend une interface poreuse 77 formée de plusieurs couches de matériau poreux et présentant une épaisseur E dans la direction radiale D_{R} comprise entre 0,5 mm et 20 mm pour améliorer l'interface entre les deux structures cellulaires en assurant une meilleure étanchéité entre les différentes cloisons tout en facilitant le glissement de la grille 80 dans le logement 75 lors des translations.

Lorsque le dispositif d'inversion de poussée 70 est dans sa première position telle qu'illustrée sur la figure 3, les premières cavités 84, les premières cloisons 82 et les premières cloisons transverses 83 se superposent respectivement avec les secondes cavités 744, les secondes cloisons 742 et les secondes cloisons transverses 743 et forment ainsi des cavités résonantes 710, ou cellules de traitement acoustique, dont le volume de chacune correspond à la somme du volume d'une première cavité 84 et du volume d'une seconde cavité 744. Les cellules de traitement acoustique 710 s'étendent ainsi sur une hauteur H dans la direction radiale D_{R} correspondant à la somme de la hauteur du panneau de traitement acoustique 74, de l'épaisseur E de l'interface poreuse 77 et de la hauteur de la grille 80. La hauteur H des cellules de traitement acoustique est comprise entre 10 mm et 100 mm.

Dans le premier mode de réalisation illustré sur les figures 3 et 4, les premières cavités 84 et les secondes cavités 744 ont une forme identique dans un plan de coupe comprenant la direction axiale D_{R} et la direction circonférentielle D_{C}, avec des premières cloisons 82 et des secondes cloisons 742 s'étendant chacune purement radialement. Ainsi, dans la première position du dispositif d'inversion de poussée 70, chacune des premières cloisons transverses 83 est non seulement dans le prolongement d'une des secondes cloisons transverses 743, mais plus précisément est alignée avec une des secondes cloisons transverses 743.

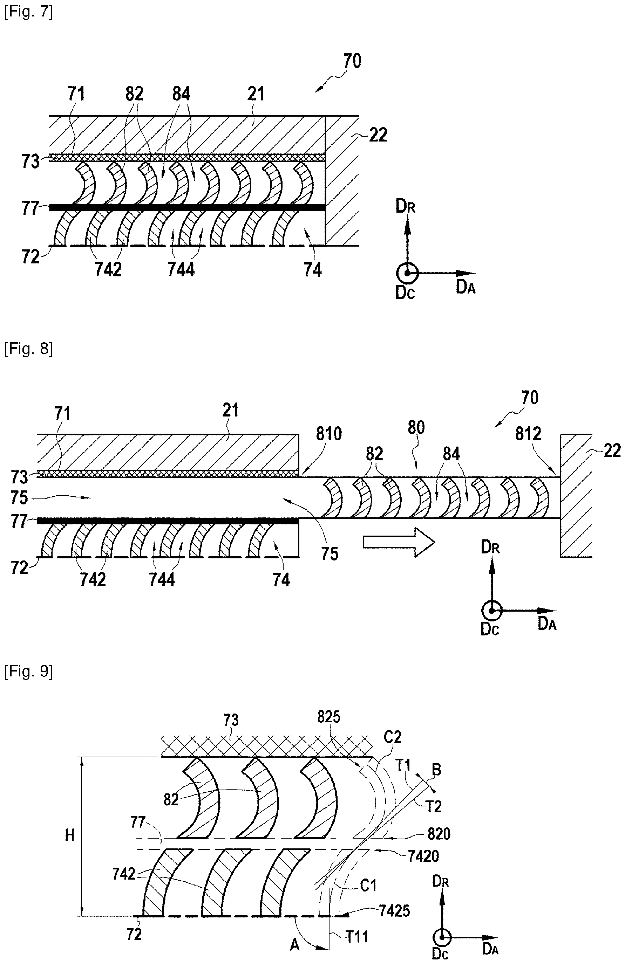

Sur les figures 7 et 8 sont représentées des vues schématiques en section selon un plan comprenant la direction axiale et la direction radiale d'un dispositif d'inversion de poussée à grille 70 monté sur une turbomachine d'aéronef selon un deuxième mode de réalisation de l'invention et respectivement dans une position d'inversion de poussée inactive et dans une position d'inversion de poussée activé.

Le dispositif d'inversion de poussée 70 du deuxième mode de réalisation illustré sur les figures 7 et 8 diffère du premier mode de réalisation illustré sur les figures 3 et 4 en ce que les premières cloisons transverses 83 de la grille 80 et les secondes cloisons transverses 743 du panneau de traitement acoustique 70 présentent chacune une courbure dans un plan de coupe comprenant la direction radiale D_{R} et la direction axiale D_{A} contrairement au premier mode de réalisation où les cloisons sont rectilignes selon la direction radiale D_{R}, c'est-à-dire où elles s'étendent radialement.

Comme cela est illustré sur la figure 9 qui est un zoom de la figure 7 illustrant l'agencement des premières cloisons 82 et des secondes cloisons 742 dans la première position du dispositif 70 d'inversion de poussée dans le deuxième mode de réalisation, la courbure des secondes cloisons 742 du panneau de traitement acoustique 74 est représenté sur la figure 9 par une première courbe C1, et la courbure des premières cloisons 82 de la grille 80 est représentée par une seconde courbe C2.

Si on considère que chaque cloison 742 et 82 est formée par l'empilement radial d'une infinité de sections, prises dans un plan orthogonal à la direction radiale D_{R}, on peut définir une courbe passant par le centre de chaque section et s'étendant sur toute la hauteur H de la cellule de traitement acoustique 710 qui est formée par l'assemblage de la première courbe C1 avec la seconde courbe C2 sur la hauteur H de la cellule de traitement acoustique 7.

Les secondes cloisons 742 du panneau de traitement acoustique 74 comprennent une première extrémité 7420 en regard de ladite grille d'inversion de poussée 80 et une seconde extrémité 7425 opposée à la première extrémité 7420 et en regard de la paroi poreuse 72.

Et les premières cloisons 82 de la grille 80 comprennent chacune une première extrémité 820 en regard du panneau de traitement acoustique 74 et une seconde extrémité 825 opposée à la première extrémité 820 et en regard de la paroi acoustiquement réfléchissante 73.

La seconde extrémité 7425 des secondes cloisons 742 est ainsi à l'entrée de la cellule de traitement acoustique 710.

En outre, pour chaque seconde cloison 742, dans un plan de coupe comprenant la direction axiale D_{A} et la direction radiale D_{R}, la tangente T11 à la seconde cloison 742 prise à la seconde extrémité 7425 forme un premier angle A avec un plan parallèle audit premier plan compris entre 60° et 120°, la paroi perforée 72 s'étendant selon ledit premier plan à la seconde extrémité 7425 de la seconde cloison 742.

Cette orientation des secondes cloisons 742 du panneau de traitement acoustique 74 à leur seconde extrémité 7425, qui est en regard du flux circulant à l'intérieur de la nacelle, permet de définir une orientation sensiblement radiale des cellules de traitement acoustique 710, pour éviter de pénaliser le fonctionnement du résonateur du fait de réflexions acoustiques non souhaitées sur les cloisons.

Les secondes cloisons 742 du panneau de traitement acoustique sont donc courbées. L'utilisation de secondes cloisons 742 courbées dans le panneau de traitement acoustique 74 permet de maximiser l'efficacité de traitement acoustique sans dégrader la fonctionnalité d'inversion de poussée de la grille quel que soit le positionnement du panneau par rapport à la grille dans la direction orthogonale au premier plan.

En outre, pour chaque première cloison 82, dans un plan de coupe comprenant la direction axiale D_{A} et la direction radiale D_{R}, la tangente T2 à la première cloison 82 à sa première extrémité 820 forme un deuxième angle B avec la tangente T1 à la seconde cloison 742 à la première extrémité 7420 lorsque le dispositif d'inversion de poussée 70 est dans ladite première position. Le deuxième angle B est compris entre -20° et +20°.

La première courbe C1 définit le premier angle A avec le premier plan. Le premier angle A est formé entre le premier plan et la tangente à l'extrémité de la première courbe C1 opposée à l'extrémité en regard de la seconde courbe C2.

Cette orientation des premières cloisons 82 de la grille d'inversion de poussée 80 et des secondes cloisons 742 à l'endroit où elles sont en regard, c'est-à-dire à l'interface entre la grille 80 et le panneau 74, permet d'avoir une continuité des cloisons des cellules de traitement acoustique 710 et ainsi d'éviter de pénaliser le fonctionnement du résonateur du fait de réflexions acoustiques non souhaitées sur les cloisons, sans perturber la fonctionnalité d'inversion de poussée.

Les premières cloisons 82 de la grille 80 d'inversion de poussée ayant toutes la même forme et les secondes cloisons 742 du panneau de traitement acoustique 74 ayant également toutes la même forme, les cellules de traitement acoustique 710 ont toutes le même profil, ce profil suivant le profil des premières et secondes cloisons 82 et 742.

Les première et seconde courbes C1 et C2 définissent le deuxième angle B. Le deuxième angle B est formé entre la tangente à la première courbe C1 à l'extrémité de la première courbe C1 en regard de la seconde courbe C2 et la tangente à la seconde courbe C2 à l'extrémité de la seconde courbe C2 en regard de la première courbe C1.

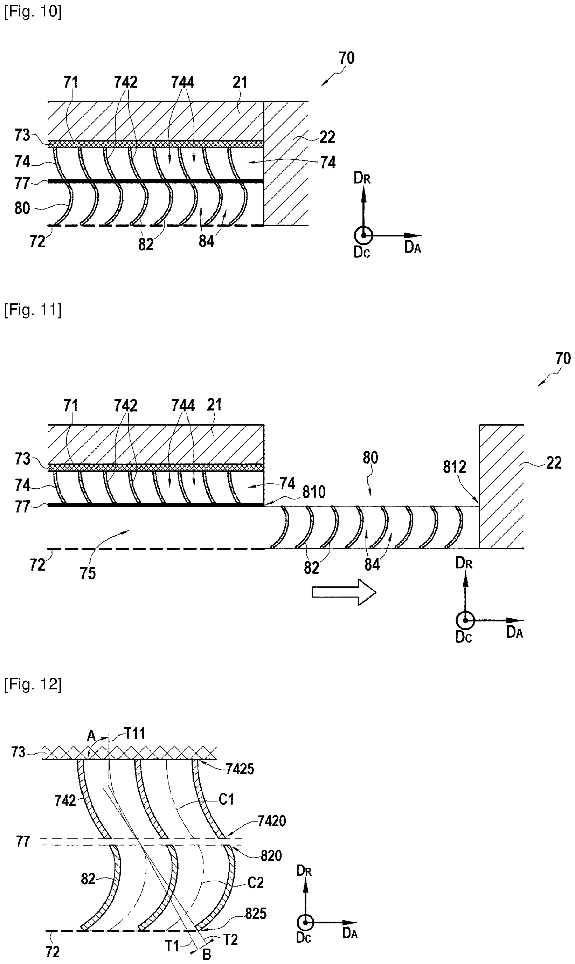

Sur les figures 10 et 11 sont représentées des vues schématiques en section selon un plan comprenant la direction axiale et la direction radiale d'un dispositif d'inversion de poussée à grille 70 monté sur une turbomachine 14 d'aéronef selon un troisième mode de réalisation de l'invention et respectivement dans une position d'inversion de poussée inactive et dans une position d'inversion de poussée activé.

Le dispositif d'inversion de poussée 70 du troisième mode de réalisation illustré sur les figures 10 et 11 diffère du deuxième mode de réalisation illustré sur les figures 7 et 8 en ce que les positions dans la direction radiale D_{R} du panneau de traitement acoustique 74 et de la grille 80 sont inversées.

Dans le troisième mode de réalisation, la grille 80 est, selon la direction radiale D_{R}, à l'intérieur du panneau de traitement acoustique 74. Ainsi, dans la première position du dispositif d'inversion de poussée 70 illustrée sur la figure 10, la grille 80 s'étend selon la direction radiale D_{R} entre la paroi perforée 72 du caisson 71 et le panneau de traitement acoustique 74, l'interface poreuse 77 s'étendant entre le panneau 74 et la grille 80 dans la direction radiale D_{R}.

Comme pour le deuxième mode de réalisation, les premières cloisons transverses 83 de la grille 80 et les secondes cloisons transverses 743 du panneau de traitement acoustique 70 présentent chacune une courbure dans un plan de coupe comprenant la direction radiale D_{R} et la direction axiale DA.

Comme cela est illustré sur la figure 12 qui est un zoom de la figure 10 illustrant l'agencement des premières cloisons 82 et des secondes cloisons 742 dans la première position du dispositif 70 d'inversion de poussée dans le deuxième mode de réalisation, la courbure des secondes cloisons 742 du panneau de traitement acoustique 74 est représenté sur la figure 12 par une première courbe C1, et la courbure des premières cloisons 82 de la grille 80 est représentée par une seconde courbe C2.

Si on considère que chaque cloison 742 et 82 est formée par l'empilement radial d'une infinité de sections, prises dans un plan orthogonal à la direction radiale D_{R}, on peut définir une courbe passant par le centre de chaque section et s'étendant sur toute la hauteur H de la cellule de traitement acoustique 710 qui est formée par l'assemblage de la première courbe C1 avec la seconde courbe C2 sur la hauteur H de la cellule de traitement acoustique 7.

Les secondes cloisons 742 du panneau de traitement acoustique 74 comprennent une première extrémité 7420 en regard de ladite grille d'inversion de poussée 80 et une seconde extrémité 7425 opposée à la première extrémité 7420 et en regard de la paroi acoustiquement réfléchissante 73.

Et les premières cloisons 82 de la grille 80 comprennent chacune une première extrémité 820 en regard du panneau de traitement acoustique 74 et une seconde extrémité 825 opposée à la première extrémité 820 et en regard de la paroi poreuse 72.

La seconde extrémité 825 des premières cloisons 82 est ainsi à l'entrée de la cellule de traitement acoustique 710.

En outre, pour chaque seconde cloison 742, dans un plan de coupe comprenant la direction axiale D_{A} et la direction radiale D_{R}, la tangente T11 à la seconde cloison 742 prise à la seconde extrémité 7425 forme un premier angle A avec un plan parallèle audit premier plan compris entre 60° et 120°, la paroi acoustiquement réfléchissante 73 s'étendant selon ledit premier plan à la seconde extrémité 7425 de la seconde cloison 742.

La première courbe C1 définit le premier angle A avec le premier plan. Le premier angle A est formé entre le premier plan et la tangente à l'extrémité de la première courbe C1 opposée à l'extrémité en regard de la seconde courbe C2.

Cette orientation des secondes cloisons 742 du panneau de traitement acoustique 74 à leur seconde extrémité 7425 permet de définir une orientation sensiblement radiale des cellules de traitement acoustique 710, pour éviter de pénaliser le fonctionnement du résonateur du fait de réflexions acoustiques non souhaitées sur les cloisons.

En outre, pour chaque première cloison 82, dans un plan de coupe comprenant la direction axiale D_{A} et la direction radiale D_{R}, la tangente T2 à la première cloison 82 à sa première extrémité 820 forme un deuxième angle B avec la tangente T1 à la seconde cloison 742 à la première extrémité 7420 lorsque le dispositif d'inversion de poussée 70 est dans ladite première position. Le deuxième angle B est compris entre -20° et +20°.

Les première et seconde courbes C1 et C2 définissent le deuxième angle B. Le deuxième angle B est formé entre la tangente à la première courbe C1 à l'extrémité de la première courbe C1 en regard de la seconde courbe C2 et la tangente à la seconde courbe C2 à l'extrémité de la seconde courbe C2 en regard de la première courbe C1.

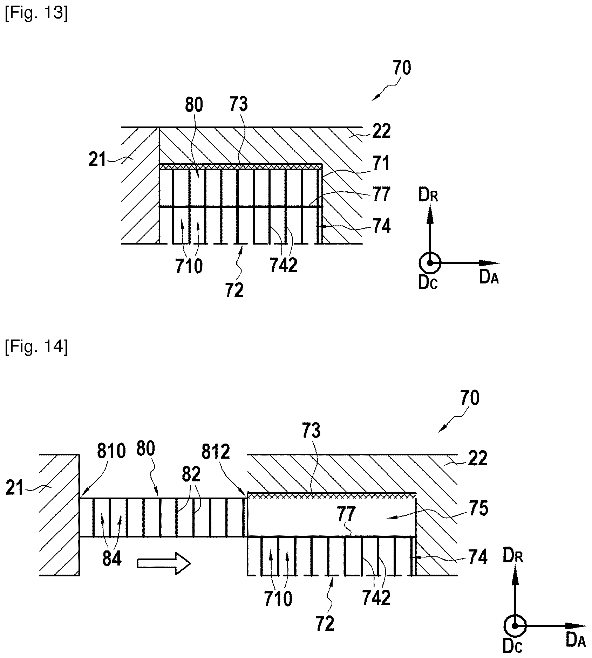

Sur les figures 13 à 18, la turbomachine 1 comprend cette fois-ci un dispositif d'inversion de poussée 70 pouvant fonctionner selon le fonctionnement décrit sur les figures 1A et 1B.

Sur les figures 13 et 14 sont représentées des vues schématiques en section selon un plan comprenant la direction axiale D_{A} et la direction radiale D_{R} d'un dispositif d'inversion de poussée à grille monté sur une turbomachine 1 d'aéronef selon un quatrième mode de réalisation de l'invention et respectivement dans une position d'inversion de poussée inactive et dans une position d'inversion de poussée activé.

Le quatrième mode de réalisation diffère du premier mode de réalisation en ce que la grille 80 est solidaire de la partie amont 21 de la nacelle 2 de la turbomachine 1 et le caisson 71 est réalisé dans la partie aval 22 de la nacelle 2. Ainsi, comme cela est illustré sur les figures 14, 16 et 18, dans les modes de réalisation illustrés sur les figures 13 à 18 et pouvant fonctionner selon le fonctionnement décrit sur les figures 1A et 1B, la première extrémité axiale 810 des grilles 80 est fixée sur une portion amont 21 de la nacelle 2 mobile par rapport à une portion aval 22 de la nacelle 2.

Le caisson 71 comprend une ouverture 76 communiquant avec le logement 75, l'ouverture s'étendant dans un plan comprenant la direction radiale D_{R} et la direction circonférentielle D_{C} à une extrémité axiale du caisson 71 en regard de la partie amont 21 de la nacelle 2.

Lorsque l'inversion de poussée est inactive, le dispositif d'inversion de poussée 70 est dans une première position illustrée sur la figure 13 dans laquelle la grille 80 est disposée dans le logement 75 du caisson 71.

Lorsque l'inversion de poussée est activée, le dispositif d'inversion de poussée 70 est dans une seconde position illustrée sur la figure 14 dans laquelle la grille 80 est sortie du caisson 71 dans la direction axiale D_{A}, le caisson 71 étant en translation avec la partie aval 21 de la nacelle 2, laissant le logement 75 libre au moins en partie.

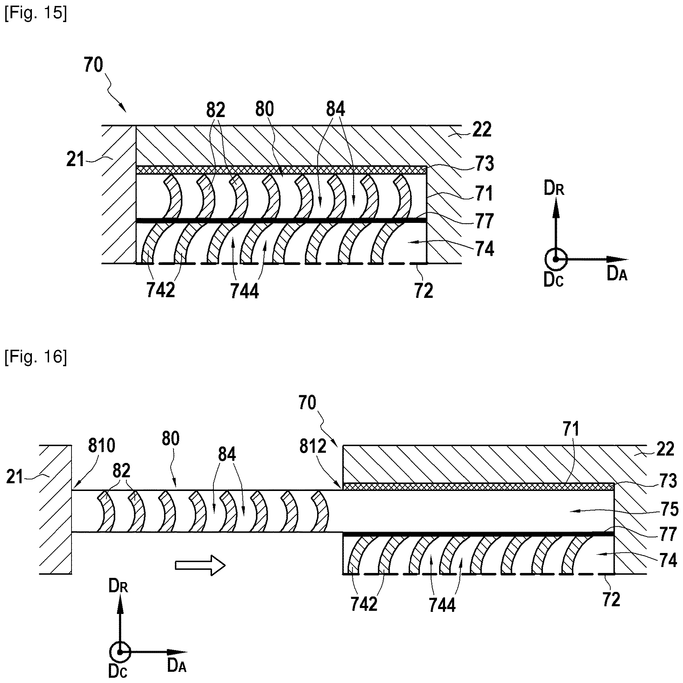

Sur les figures 15 et 16 sont représentées des vues schématiques en section selon un plan comprenant la direction axiale D_{A} et la direction radiale D_{R} d'un dispositif d'inversion de poussée à grille monté sur une turbomachine 1 d'aéronef selon un cinquième mode de réalisation de l'invention et respectivement dans une position d'inversion de poussée inactive et dans une position d'inversion de poussée activé.

Le cinquième mode de réalisation diffère du deuxième mode de réalisation en ce que la grille 80 est solidaire de la partie amont 21 de la nacelle 2 de la turbomachine 1 et le caisson 71 est réalisé dans la partie aval 22 de la nacelle 2.

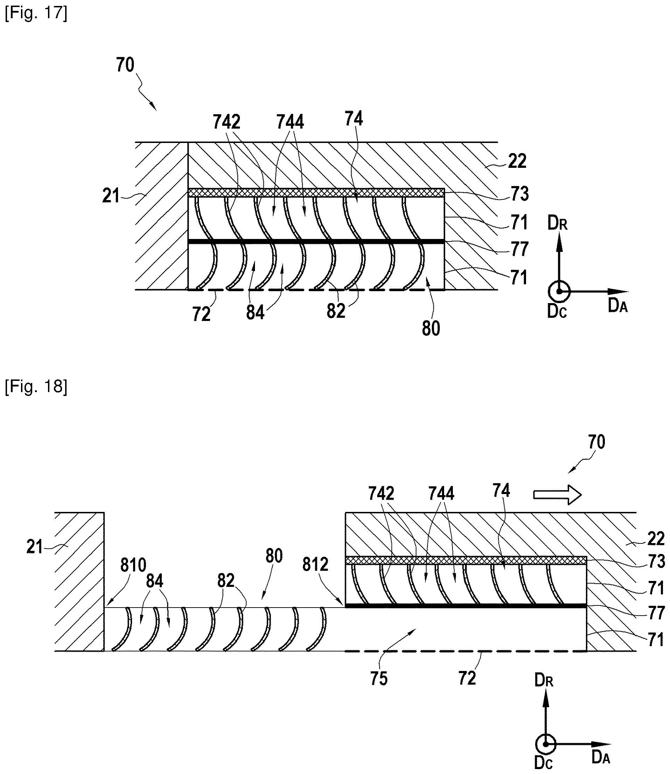

Sur les figures 17 et 18 sont représentées des vues schématiques en section selon un plan comprenant la direction axiale D_{A} et la direction radiale D_{R} d'un dispositif d'inversion de poussée à grille monté sur une turbomachine 1 d'aéronef selon un sixième mode de réalisation de l'invention et respectivement dans une position d'inversion de poussée inactive et dans une position d'inversion de poussée activé. Le sixième mode de réalisation diffère du troisième mode de réalisation en ce que la grille 80 est solidaire de la partie amont 21 de la nacelle 2 de la turbomachine 1 et le caisson 71 est réalisé dans la partie aval 22 de la nacelle 2.

L'invention fournit ainsi un dispositif d'inversion de poussée à grille qui permet à la fois de réorienter un flux d'air vers l'amont de la turbomachine à l'extérieur de la nacelle et de minimiser les pertes de charge à travers la grille lorsque l'inversion de poussée est activée, et de maximiser l'efficacité d'absorption acoustique lorsque l'inversion de poussée est inactive.

## Revendications

1. Dispositif (70) d'inversion de poussée à grille pour une turbomachine (1) d'un aéronef, comprenant une grille (80) d'inversion de poussée et un caisson (71), la grille (80) s'étendant dans un premier plan définissant une première direction (D_{A}) et une seconde direction (D_{C}) et comportant des premières cavités (84), le caisson (71) comprenant une ouverture (76) s'étendant dans un plan orthogonal à ladite première direction (D_{A}) et définissant un logement (75) dans lequel la grille (80) peut être insérée selon ladite première direction (D_{A}), et le caisson (71) et ladite grille (80) étant en translation relative l'un par rapport à l'autre dans la première direction (D_{A}) entre une première position du dispositif (70) dans laquelle la grille (80) est entièrement disposée dans le logement (75) et une seconde position du dispositif (70) dans laquelle ladite grille (80) est au moins en partie hors dudit logement (75),
le caisson (71) comprenant en outre un panneau de traitement acoustique (74) comportant des secondes cavités (744) s'étendant dans un second plan parallèle au premier plan,
**caractérisé en ce que** chaque première cavité (84) est en regard d'une seconde cavité (744) lorsque le dispositif (70) est dans la première position pour former une cellule de traitement acoustique (710).

2. Dispositif (70) d'inversion de poussée à grille selon la revendication 1, dans lequel ladite grille d'inversion de poussée (80) comprend des premières cloisons (82) disposées successivement selon la première direction (D_{A}) et parallèles les unes aux autres et des premières cloisons transverses (83) sécantes desdites premières cloisons (82) et s'étendant chacune dans des plans parallèles les uns aux autres et parallèles à la première direction (D_{A}), ledit panneau de traitement acoustique (74) comprend des secondes cloisons (742) disposées successivement selon la première direction (D_{A}) et parallèles les unes aux autres et des secondes cloisons transverses (743) sécantes desdites secondes cloisons (742) et s'étendant chacune dans des plans parallèles les uns aux autres et parallèles à la première direction (D_{A}), les premières cavités (84) étant définies chacune par deux premières cloisons (82) et deux premières cloisons transverses (83), les secondes cavités (744) étant définies chacune par deux secondes cloisons (742) et deux secondes cloisons transverses (743), et chaque première cloison (82) est disposée dans le prolongement d'une seconde cloison (742) dans une direction sécante au premier plan et chaque première cloison transverse (83) est disposée dans le prolongement d'une seconde cloison transverse (743) dans ladite direction sécante au premier plan lorsque le dispositif (70) est dans ladite première position.

3. Dispositif (70) d'inversion de poussée à grille selon la revendication 2, dans lequel les secondes cloisons (742) dudit panneau de traitement acoustique (74) comprennent une première extrémité (7420) en regard de ladite grille (80) d'inversion de poussée et une seconde extrémité (7425) opposée à la première extrémité (7420), et, pour chaque seconde cloison (742), et la tangente (T11) à la seconde cloison (742) à la seconde extrémité (7425) forme un premier angle (A) avec un plan parallèle audit premier plan lorsque le dispositif (70) d'inversion de poussée est dans ladite première position, le premier angle (A) étant compris entre 60° et 120°.

4. Dispositif (70) d'inversion de poussée à grille selon la revendication 3, dans lequel les premières cloisons (82) de ladite grille (80) d'inversion de poussée comprennent une première extrémité (820) en regard dudit panneau de traitement acoustique (74) et une seconde extrémité (825) opposée à la première extrémité (820), et, pour chaque première cloison (82), et la tangente (T2) à la première cloison (82) à la première extrémité (820) de la première cloison (82) forme un second angle (B) avec la tangente (T1) à la seconde cloison (742) à la première extrémité (7420) de la seconde cloison (742) lorsque le dispositif (70) d'inversion de poussée est dans ladite première position, le second angle (B) étant compris entre -20° et +20°.

5. Dispositif (70) d'inversion de poussée à grille selon l'une des revendications 2 à 4, dans lequel les premières cloisons (82) de la grille (80) comprennent une première courbure (C2) dans la direction orthogonale audit premier plan et les secondes cloisons (742) du panneau de traitement acoustique (74) comprennent une seconde courbure (C1) dans la direction orthogonale audit premier plan distincte de la première courbure (C2), les cellules de traitement acoustique (710) formées dans la première position du dispositif d'inversion de poussée (70) comprenant deux parois ondulées orthogonales à la première direction (D_{A}) et formées chacune par une première cloison (82) et une seconde cloison (742) dans le prolongement l'une de l'autre.

6. Dispositif (70) d'inversion de poussée à grille selon l'une des revendications 1 à 5, dans lequel les premières cavités (84) et les secondes cavités (744) ont la même forme dans un plan de coupe parallèle audit premier plan.

7. Dispositif (70) d'inversion de poussée à grille selon l'une des revendications 1 à 6, dans lequel le caisson (71) comprend en outre une interface poreuse (77) d'une épaisseur (E) comprise entre 0,5 mm et 20 mm, formée d'au moins une couche de matériau poreux et disposée à l'interface entre ledit panneau de traitement acoustique (74) et ladite grille (80) lorsque le dispositif d'inversion de poussée (70) est dans la première position, l'épaisseur (E) s'étendant dans une direction (D_{R}) perpendiculaire audit premier plan.

8. Dispositif (70) d'inversion de poussée à grille selon l'une des revendications 1 à 7, dans lequel les cellules de traitement acoustique possèdent une hauteur (H) comprise entre 10 mm et 100 mm dans une direction (D_{R}) perpendiculaire au premier plan.

9. Dispositif (70) d'inversion de poussée à grille selon l'une des revendications 1 à 8, dans lequel le caisson (71) comprend une paroi perforée (72) et une paroi acoustiquement réfléchissante (73) s'étendant chacune parallèlement audit premier plan, la grille (80) et le panneau de traitement acoustique étant disposés entre la paroi perforée (72) et la paroi acoustiquement réfléchissante (73) lorsque le dispositif d'inversion de poussée (70) est dans la première position.

10. Dispositif (70) d'inversion de poussée à grille selon la revendication 9, dans lequel ladite paroi perforée (72) est directement assemblée par collage audit panneau de traitement acoustique (74).

11. Dispositif (70) d'inversion de poussée à grille selon l'une des revendications 9 ou 10, dans lequel le panneau de traitement acoustique (74) est disposé entre la paroi perforée (72) et la grille d'inversion de poussée (80) lorsque le dispositif d'inversion de poussée (70) est dans la première position.

12. Dispositif (70) d'inversion de poussée à grille selon la revendication l'une des revendications 9 ou 10, dans lequel le panneau de traitement acoustique (74) est disposé entre la paroi acoustiquement réfléchissante (73) et la grille d'inversion de poussée (80) lorsque le dispositif d'inversion de poussée (70) est dans la première position.

13. Dispositif (70) selon l'une des revendications 1 à 12, dans lequel la grille (80) est mobile et le caisson (71) est fixe.

14. Dispositif (70) selon l'une des revendications 1 à 12, dans lequel la grille (80) est fixe et le caisson (71) est mobile.

15. Turbomachine (1) destinée à être montée sur un aéronef, la turbomachine (1) comprenant une nacelle (2) à symétrie de révolution définissant une direction axiale (D_{A}) et une direction radiale (D_{R}), la nacelle (2) comportant une épaisseur selon la direction radiale (D_{R}) et un logement s'étendant selon la direction axiale (D_{A}) dans son épaisseur pour recevoir une grille (80) d'un dispositif d'inversion de poussée à grille,
**caractérisée en ce qu'**elle comprend un dispositif (70) d'inversion de poussée à grille selon la revendication 14, la grille (80) étant disposée, lorsque l'inversion de poussée n'est pas requise, dans le logement correspondant de la nacelle (2) de la turbomachine (1).

16. Aéronef comprenant au moins une turbomachine (1) selon la revendication 15.

## Patentansprüche

1. Schubumkehrvorrichtung (70) mit Gitter für eine Turbomaschine (1) eines Fluggeräts, umfassend ein Schubumkehrgitter (80) und einen Kasten (71), wobei sich das Gitter (80) in einer ersten Ebene erstreckt, die eine erste Richtung (D_{A}) und eine zweite Richtung (D_{c}) definiert und erste Hohlräume (84) aufweist, wobei der Kasten (71) eine Öffnung (76) umfasst, die sich in einer Ebene erstreckt, die orthogonal zu der ersten Richtung (D_{A}) ist und eine Aufnahme (75) definiert, in der das Gitter (80) in der ersten Richtung (D_{A}) einsetzbar ist, und der Kasten (71) und das Gitter (80) relativ im Verhältnis zueinander in der ersten Richtung (D_{A}) zwischen einer ersten Position der Vorrichtung (70), in der das Gitter (80) vollständig in der Aufnahme (75) angeordnet ist, und einer zweiten Position der Vorrichtung (70), in der das Gitter (80) mindestens zum Teil außerhalb der Aufnahme (75) ist, in Translation ist,
wobei der Kasten (71) ferner eine Schallbehandlungsplatte (74) umfasst, die zweite Hohlräume (744) aufweist, die sich in einer zweiten Ebene erstrecken, die parallel zur ersten Ebene ist,
**dadurch gekennzeichnet, dass** jeder erste Hohlraum (84) einem zweiten Hohlraum (744) zugewandt ist, wenn die Vorrichtung (70) in der ersten Position ist, um eine Schallbehandlungszelle (710) zu bilden.

2. Schubumkehrvorrichtung (70) mit Gitter nach Anspruch 1, wobei das Schubumkehrgitter (80) erste Trennwände (82) umfasst, die nacheinander in der ersten Richtung (D_{A}) und parallel zueinander angeordnet sind, und erste transversale Trennwände (83), die die ersten Trennwände (82) schneiden und sich jeweils in Ebenen erstrecken, die parallel zueinander und parallel zur ersten Richtung (D_{A}) sind, wobei die Schallbehandlungsplatte (74) zweite Trennwände (742) umfasst, die nacheinander in der ersten Richtung (D_{A}) und parallel zueinander angeordnet sind und zweite transversale Trennwände (743), die die zweiten Trennwände (742) schneiden und sich jeweils in Ebenen erstrecken, die parallel zueinander und parallel zur ersten Richtung (D_{A}) sind, wobei die ersten Hohlräume (84) jeweils von zwei ersten Trennwänden (82) und zwei ersten transversalen Trennwänden (83) definiert sind, wobei die zweiten Hohlräume (744) jeweils von zwei zweiten Trennwänden (742) und zwei zweiten transversalen Trennwänden (743) definiert sind, und jede erste Trennwand (82) in der Verlängerung einer zweiten Trennwand (742) in einer schneidenden Richtung zur ersten Ebene angeordnet ist und jede erste transversale Trennwand (83) in der Verlängerung einer zweiten transversalen Trennwand (743) in der schneidenden Richtung zur ersten Ebene angeordnet ist, wenn die Vorrichtung (70) in der ersten Position ist.

3. Schubumkehrvorrichtung (70) mit Gitter nach Anspruch 2, wobei die zweiten Trennwände (742) der Schallbehandlungsplatte (74) ein erstes Ende (7420), das dem Schubumkehrgitter (80) zugewandt ist, und ein zweites Ende (7425) gegenüber dem ersten Ende (7420) umfassen, und, für jede zweite Trennwand (742), und die Tangente (T11) an der zweiten Trennwand (742) am zweiten Ende (7425) einen ersten Winkel (A) mit einer Ebene bildet, die parallel zur ersten Ebene ist, wenn die Schubumkehrvorrichtung (70) in der ersten Position ist, wobei der erste Winkel (A) zwischen 60° und 120° beträgt.

4. Schubumkehrvorrichtung (70) mit Gitter nach Anspruch 3, wobei die ersten Trennwände (82) des Schubumkehrgitters (80) ein erstes Ende (820), das der Schallbehandlungsplatte (74) zugewandt ist, und ein zweites Ende (825) gegenüber dem ersten Ende (820) umfassen, und, für jede erste Trennwand (82), und die Tangente (T2) an der ersten Trennwand (82) am ersten Ende (820) der ersten Trennwand (82) einen zweiten Winkel (B) mit der Tangente (T1) an der zweiten Trennwand (742) am ersten Ende (7420) der zweiten Trennwand (742) bildet, wenn die Schubumkehrvorrichtung (70) in der ersten Position ist, wobei der zweite Winkel (B) zwischen -20° und +20° beträgt.

5. Schubumkehrvorrichtung (70) mit Gitter nach einem der Ansprüche 2 bis 4, wobei die ersten Trennwände (82) des Gitters (80) eine erste Krümmung (C2) in der Richtung umfassen, die orthogonal zum ersten Ebene ist und die zweiten Trennwände (742) der Schallbehandlungsplatte (74) eine zweite Krümmung (C1) in der Richtung umfassen, die orthogonal zum ersten Ebene ist, die sich von der ersten Krümmung (C2) unterscheidet, wobei die gebildeten Schallbehandlungszellen (710) in der ersten Position der Schubumkehrvorrichtung (70) zwei gewellte Wände umfassen, die orthogonal zur ersten Richtung (D_{A}) sind und jeweils von einer ersten Trennwand (82) und einer zweiten Trennwand (742) in der Verlängerung zueinander gebildet sind.

6. Schubumkehrvorrichtung (70) mit Gitter nach einem der Ansprüche 1 bis 5, wobei die ersten Hohlräume (84) und die zweiten Hohlräume (744) dieselbe Form in einer Schnittebene haben, die parallel zur ersten Ebene ist.

7. Schubumkehrvorrichtung (70) mit Gitter nach einem der Ansprüche 1 bis 6, wobei der Kasten (71) ferner eine poröse Schnittstelle (77) mit einer Dicke (E) umfasst, die zwischen 0,5 mm und 20 mm liegt, die von mindestens einer porösen Materialschicht gebildet und an der Schnittstelle zwischen der Schallbehandlungsplatte (74) und dem Gitter (80) angeordnet ist, wenn die Schubumkehrvorrichtung (70) in der ersten Position ist, wobei sich die Dicke (E) in einer Richtung (D_{R}) erstreckt, die senkrecht zur ersten Ebene ist.

8. Schubumkehrvorrichtung (70) mit Gitter nach einem der Ansprüche 1 bis 7, wobei die Schallbehandlungszellen eine Höhe (H) besitzen, die zwischen 10 mm und 100 mm in einer Richtung (D_{R}) liegt, die senkrecht zur ersten Ebene ist.

9. Schubumkehrvorrichtung (70) mit Gitter nach einem der Ansprüche 1 bis 8, wobei der Kasten (71) eine perforierte Wand (72) und eine akustisch reflektierende Wand (73) umfasst, die sich jeweils parallel zur ersten Ebene erstrecken, wobei das Gitter (80) und die Schallbehandlungsplatte zwischen der perforierten Wand (72) und der akustisch reflektierenden Wand (73) angeordnet sind, wenn die Schubumkehrvorrichtung (70) in der ersten Position ist.

10. Schubumkehrvorrichtung (70) mit Gitter nach Anspruch 9, wobei die perforierte Wand (72) direkt durch Kleben mit der Schallbehandlungsplatte (74) verbunden ist.

11. Schubumkehrvorrichtung (70) mit Gitter nach einem der Ansprüche 9 oder 10, wobei die Schallbehandlungsplatte (74) zwischen der perforierten Wand (72) und dem Schubumkehrgitter (80) angeordnet ist, wenn die Schubumkehrvorrichtung (70) in der ersten Position ist.

12. Schubumkehrvorrichtung (70) mit Gitter nach einem der Ansprüche 9 oder 10, wobei die Schallbehandlungsplatte (74) zwischen der akustisch reflektierenden Wand (73) und dem Schubumkehrgitter (80) angeordnet ist, wenn die Schubumkehrvorrichtung (70) in der ersten Position ist.

13. Vorrichtung (70) nach einem der Ansprüche 1 bis 12, wobei das Gitter (80) beweglich ist und der Kasten (71) fest ist.

14. Vorrichtung (70) nach einem der Ansprüche 1 bis 12, wobei das Gitter (80) fest ist und der Kasten (71) beweglich ist.

15. Turbomaschine (1), die zur Anbringung an einem Fluggerät bestimmt ist, wobei die Turbomaschine (1) eine Gondel (2) mit Drehsymmetrie umfasst, die eine axiale Richtung (D_{A}) und eine radiale Richtung (D_{R}) definiert, wobei die Gondel (2) eine Dicke in der radialen Richtung (D_{R}) und eine Aufnahme aufweist, die sich in der axialen Richtung (D_{A}) in ihrer Dicke erstreckt, um ein Gitter (80) einer Schubumkehrvorrichtung mit Gitter aufnehmen zu können,
**dadurch gekennzeichnet, dass** sie eine Schubumkehrvorrichtung (70) mit Gitter nach Anspruch 14 umfasst, wobei das Gitter (80), wenn die Schubumkehr nicht erforderlich ist, in der entsprechenden Aufnahme der Gondel (2) der Turbomaschine (1) angeordnet ist.

16. Fluggerät, das mindestens eine Turbomaschine (1) nach Anspruch 15 umfasst.

## Claims

1. A cascade type thrust reverser device (70) for a turbomachine (1) of an aircraft, comprising a thrust reverser cascade (80) and a casing (71), the cascade (80) extending in a first plane defining a first direction (D_{A}) and a second direction (D_{C}) and including first cavities (84), the casing (71) comprising an opening (76) extending in a plane orthogonal to said first direction (D_{A}) and defining a housing (75) wherein the cascade (80) can be inserted in said first direction (D_{A}), and the casing (71) and said cascade (80) being in relative translation with respect to one another in the first direction (D_{A}) between a first position of the device (70) in which the cascade (80) is entirely positioned in the housing (75) and a second position of the device (70) in which said cascade (80) is at least partially outside said housing (75), the casing (71) further comprising an acoustic treatment panel (74) including second cavities (744) extending in a second plane parallel to the first plane, **characterized in that** each first cavity (84) faces a second cavity (744) when the device (70) is in the first position to form an acoustic treatment cell (710).

2. The cascade type thrust reverser device (70) according to claim 1, wherein said thrust reverser cascade (80) comprises first partitions (82) positioned successively in the first direction (D_{A}) and parallel to one another and first transverse partitions (83) intersecting said first partitions (82) and each extending in planes parallel to one another and parallel to the first direction (D_{A}), said acoustic treatment panel (74) comprises second partitions (742) positioned successively in the first direction (D_{A}) and parallel to one another and second transverse partitions (743) intersecting said second partitions (742) and each extending in planes parallel to one another and parallel to the first direction (D_{A}), the first cavities (84) each being defined by two first partitions (82) and two first transverse partitions (83), the second cavities (744) each being defined by two second partitions (742) and two second transverse partitions (743), and each first partition (82) is positioned in the continuation of a second partition (742) in a direction intersecting the first plane and each first transverse partition (83) is positioned in the continuation of a second transverse partition (743) in said direction intersecting the first plane when the device (70) is in said first position.

3. The cascade type thrust reverser device (70) according to claim 2, wherein the second partitions (742) of said acoustic treatment panel (74) comprise a first end (7420) facing said thrust reverser cascade (80) and a second end (7425) opposite to the first end (7420), and for each second partition (742), and the tangent (T11) to the second partition (742) at the second end (7425) forms a first angle (A) with a plane parallel to said first plane when the thrust reverser device (70) is in said first position, the first angle (A) being comprised between 60° and 120°.

4. The cascade type thrust reverser device (70) according to claim 3, wherein the first partitions (82) of said thrust reverser cascade (80) comprise a first end (820) facing said acoustic treatment panel (74) and a second end (825) opposite to the first end (820), and for each first partition (82), and the tangent (T2) to the first partition (82) at the first end (820) of the first partition (82) forms a second angle (B) with the tangent (T1) to the second partition (742) at the first end (7420) of the second partition (742) when the thrust reverser device (70) is in said first position, the second angle (B) being comprised between -20° and +20°.

5. The cascade type thrust reverser device (70) according to one of claims 2 to 4, wherein the first partitions (82) of the cascade (80) comprise a first curvature (C2) in the direction orthogonal to the first plane and the second partitions (742) of the acoustic treatment panel (74) comprise a second curvature (C1) in the direction orthogonal to the first plane distinct from the first curvature (C2), the acoustic treatment cells (710) formed in the first position of the thrust reverser device (70) comprising two undulated walls orthogonal to the first direction (D_{A}) and each formed by a first partition (82) and a second partition (742) in the continuation of one another.

6. The cascade type thrust reverser device (70) according to one of claims 1 to 5, wherein the first cavities (84) and the second cavities (744) have the same shape in a section plane parallel to said first plane.

7. The cascade type thrust reverser device (70) according to one of claims 1 to 6, wherein the casing (71) also comprises a porous interface (77) with a thickness (E) comprised between 0.5 mm and 20 mm, formed of at least one layer of porous material and positioned at the interface between said acoustic treatment panel (74) and said cascade (80) when the thrust reverser device (70) is in the first position, the thickness (E) extending in a direction (D_{R}) perpendicular to said first plane.

8. The cascade type thrust reverser device (70) according to one of claims 1 to 7, wherein the acoustic treatment cells have a height (H) comprised between 10 mm and 100 mm in a direction (D_{R}) perpendicular to the first plane.

9. The cascade type thrust reverser device (70) according to one of claims 1 to 8, wherein the casing (71) comprises a perforated wall (72) and an acoustically reflecting wall (73) each extending parallel to said first plane, the cascade (80) and the acoustic treatment panel being positioned between the perforated wall (72) and the acoustically reflecting wall (73) when the thrust reverser device (70) is in the first position.

10. The cascade type thrust reverser device (70) according to claim 9, wherein said perforated wall (72) is directly assembled by gluing to said acoustic treatment panel (74).

11. The cascade type thrust reverser device (70) according to one of claims 9 or 10, wherein the acoustic treatment panel (74) is positioned between the perforated wall (72) and the thrust reverser cascade (80) when the thrust reverser device (70) is in the first position.

12. The cascade type thrust reverser device (70) according to one of claims 9 or 10, wherein the acoustic treatment panel (74) is positioned between the acoustically reflecting wall (73) and the thrust reverser cascade (80) when the thrust reverser device (70) is in the first position.

13. The device (70) according to one of claims 1 to 12, wherein the cascade (80) is movable and the casing (71) is fixed.

14. The device (70) according to one of claims 1 to 12, wherein the cascade (80) is fixed and the casing (71) is movable.

15. A turbomachine (1) intended to be mounted on an aircraft, the turbomachine (1) comprising an axially symmetrical nacelle (2) defining an axial direction (D_{A}) and a radial direction (D_{R}), the nacelle (2) including a thickness in the radial direction (D_{R}) and a housing extending in the axial direction (D_{A}) in its thickness to accommodate a cascade (80) of a cascade type thrust reverser device,
**characterized in that** it comprises a cascade type thrust reverser device (70) according to claim 14, the cascade (80) being positioned, when the thrust reversal is not required, in the corresponding housing of the nacelle (2) of the turbomachine (1).

16. An aircraft comprising at least one turbomachine (1) according to claim 15.
